# EUROPÄISCHE PATENTSCHRIFT

(11) **EP 1 370 759 B1**
(45) Veröffentlichungstag und Bekanntmachung des Hinweises auf die Patenterteilung: **23.04.2008**
(21) Anmeldenummer: 02722045.8
(22) Anmeldetag: 05.02.2002
(51) Int. Cl.: F02D 41/14

(54) **VERFAHREN ZUM BETRIEB VON BRENNKRAFTMASCHINEN**
METHOD FOR OPERATING INTERNAL COMBUSTION ENGINES
PROCEDE PERMETTANT DE FAIRE FONCTIONNER UN MOTEUR A COMBUSTION INTERNE

(30) Priorität: 10.03.2001 DE 10111586
(43) Veröffentlichungstag der Anmeldung: 17.12.2003
(73) Patentinhaber: Volkswagen Aktiengesellschaft, 38436 Wolfsburg (DE)
(72) Erfinder: POTT, Ekkehard, 38518 Gifhorn (DE)
(74) Vertreter: Pohlmann, Bernd Michael
(86) Internationale Anmeldenummer: PCT/EP2002/001164
(87) Internationale Veröffentlichungsnummer: WO 2002/073019

(56) Entgegenhaltungen:
- EP-A- 0 816 820
- WO-A-90/02874
- DE-A- 4 125 154
- DE-A- 4 207 506
- DE-A- 4 402 850
- DE-A- 4 441 432
- DE-A- 10 010 041
- DE-A- 19 511 548
- DE-A- 19 936 355
- DE-C- 19 852 244
- US-A- 5 329 764
- US-A- 5 452 576
- PATENT ABSTRACTS OF JAPAN vol. 013, no. 327 (M-854), 24. Juli 1989 (1989-07-24) & JP 01 110851 A (TOYOTA MOTOR CORP), 27. April 1989 (1989-04-27)

## Beschreibung

Die Erfindung betrifft Verfahren zum Betrieb von Brennkraftmaschinen mit den in den Oberbegriffen der unabhängigen Ansprüche genannten Merkmalen.

### Stand der Technik

Zur Optimierung des Emissions- und Verbrauchsverhaltens von Brennkraftmaschinen ist es bekannt, die Schadstoffemissionswerte des Abgases zu ermitteln und die Betriebsparameter der Brennkraftmaschine in Abhängigkeit von den ermittelten Emissionswerten zu verändern, um die Emissionswerte zu verringern. Hierzu ist es üblich, Sensoren in der Abgasanlage der Brennkraftmaschine anzuordnen, deren Signale einer Motorsteuerung zugeführt werden, die in Abhängigkeit von den Signalen der Sensoren Betriebsparameter wie beispielsweise die angesaugte Luftmenge, den Zündzeitpunkt, gegebenenfalls eine Abgasrückführrate oder dergleichen beeinflusst. Da die heute üblichen Brennkraftmaschinen aufgrund relativ hoher Rohemissionen von Schadstoffen eine Abgasnachbehandlung mittels Katalysatoreinrichtungen erfordern, sind die erwähnten Sensoren stromabwärts und/oder stromaufwärts der Katalysatoreinrichtungen in der Abgasanlage angeordnet. Für eine differenzierte Erfassung der Schadstoffemissionen ist es in diesem Zusammenhang ferner bekannt, die Emissionswerte verschiedener Schadstoffkomponenten separat zu ermitteln. In diesem Zusammenhang ist aus der US PS-5,329,764 ein Motorkontrollsystem zur Optimierung der Konversionseffizienz einer in der Abgasanlage einer Brennkraftmaschine angeordneten Katalysatoreinrichtung bekannt, die einen Stickoxyd (NOX)-Sensor und einen Kohlenmonoxyd (CO)- und Kohlenwasserstoff (HC)-Sensor aufweist. Beide Sensoren sind stromabwärts der Katalysatoreinrichtung angeordnet. Aus den Signalen beider Sensoren wird ein Differenzsignal gebildet, welches als Feedback-Variable einer Kraftstoffregelvorrichtung zugeführt wird, um ein gewünschtes Luft/Kraftstoffverhältnis einzustellen. Das Differenzsignal dient dabei als Korrektursignal für die Einstellung des Lambdawertes des Abgases, um eine maximale Konversionseffizienz der Katalysatoreinrichtung zu erreichen. Die mit diesem bekannten System zu erreichende Optimierung des Emissionsverhaltens ist jedoch beschränkt auf einen Bereich um ein stöchiometrisches Luft/Kraftstoffverhältnis, wobei auch dort aufgrund des Einflusses weiterer Größen wie Lecks in der Abgasanlage nur eine ungenaue Korrektur möglich ist.

Aus der DE 195 11 548 A1 ist ferner ein Verfahren zur Stickstoffreduzierung im Abgas einer Brennkraftmaschine bekannt, bei dem der Gehalt des Abgases an Kohlenwasserstoffen, Kohlenmonoxyd oder Stickoxyd stromabwärts eines Stickoxydabsorbers gemessen wird, und wobei jeweils von einer stöchiometrischen oder Anreicherungsbetriebsphase auf eine Magerbetriebsphase umgeschaltet wird, sobald der Kohlenwasserstoff- oder Kohlenmonoxydgehalt über ein vorgegebenes Maß ansteigt oder sobald der Stickoxydgehalt unter ein vorgegebenes Maß absinkt. Von einer Magerbetriebsphase wird auf eine stöchiometrische oder Anreicherungsbetriebsphase umgeschaltet, sobald der gemessene Stickoxydgehalt über ein vorgegebenes Maß ansteigt.

Aus den EP 0899563, WO 79/47962, EP 090941 und DE 198 31 424 sind ferner Sensoren zur Bestimmung der Konzentration von Bestandteilen von Abgasen, insbesondere zur Bestimmung eines oder mehrerer der Gase NOX, CO, H2 und vorzugsweise ungesättigter Kohlenwasserstoffe, bekannt. Diese Sensoren werden zur Optimierung von Verbrennungsreaktionen und zur Erkennung von Komponenten-Fehlfunktionen eingesetzt.

Aufgabe der erfindungsgemäßen Verfahren ist es, eine Optimierung des Betriebs einer Brennkraftmaschine im Hinblick auf die Emissions-Sicherheit und den Verbrauch an Kraftstoff zu ermöglichen.

Diese Aufgabe wird erfindungsgemäß jeweils durch die Merkmale der unabhängigen Patentansprüche gelöst.

Erfindungsgemäß wird zum Betrieb einer Brennkraftmaschine, beispielsweise eines insbesondere magerlauffähigen Ottomotors oder einer Dieselbrennkraftmaschine, mindestens ein Betriebsparameter der Brennkraftmaschine in Abhängigkeit von Emissionswerten des Abgases zur Beeinflussung der Emissionswerte verändert. Die Emissionswerte von mindestens zwei Schadstoffkomponenten des Abgases, wie CO, NO, NO2, NH3, S02, H2S, CH4 und/oder weitere HC-Komponenten werden ermittelt Diese Aufgabe wird erfindungsgemäß jeweils durch die Merkmale der unabhängigen Patentansprüche gelöst.

Erfindungsgemäß ist zum Betrieb einer Brennkraftmaschine, beispielsweise eines insbesondere magerlauffähigen Ottomotors oder einer Dieselbrennkraftmaschine, bei dem mindestens ein Betriebsparameter der Brennkraftmaschine in Abhängigkeit von Emissionswerten des Abgases zur Beeinflussung der Emissionswerte verändert wird, vorgesehen, dass die Emissionswerte von mindestens zwei Schadstoffkomponenten des Abgases, wie CO, NO, NO2, NH3, S02, H2S, CH4, und/oder weitere HC Komponenten gemessen werden, und, wenn der Emissionswert einer ersten der mindestens zwei Schadstoffkomponenten einen vorgegebenen maximalen Schwellwert überschreitet, der Wert von mindestens einem Betriebsparameter, beispielsweise eine Drosselklappenstellung, einer Abgasrückführrate, ein Zündzeitpunkt, eine Tumble-Klappenstellung, ein Einspritzzeitpunkt, ein Ladedruck, und/oder eine Phasenstellung der Nockenwelle oder dergleichen, zur Absenkung des Emissionswertes der ersten Schadstoffkomponente verändert wird, wobei zumindest für die zweite der mindestens zwei Schadstoffkomponenten eine Überwachung des Emissionswertes daraufhin vorgesehen ist, ob dieser unterhalb eines Maximalwertes für diese Schadstoffkomponente bleibt und eine Erhöhung des Emissionswertes bis zu diesem Maximalwert zugelassen wird.

Ferner ist vorgesehen dass die Emissionswerte von mindestens zwei Schadstoffkomponenten des Abgases, wie CO, NO, NO2, NH3, S02, H2S, CH4 und/oder weitere HC-Komponenten, ermittelt werden und, wenn der Emissionswert einer ersten der mindestens zwei Schadstoffkomponenten einen vorgegebenen minimalen Schwellwert unterschreitet, der Wert von mindestens einem Betriebsparameter, beispielsweise eine Drosselklappensteltung, eine Abgasrückführrate, ein Zündzeitpunkt, eine Tumble - Klappenstellung, ein Einspritzzeitpunkt, ein Ladedruck, und/oder eine Phasenenstellung der Nockenwelle oder dergleichen, zur Erhöhung des Emissionswertes dieser Schadstoffkomponente bis auf höchstens diesen Schwellwert zur Verminderung vorgesehen sind, eine optimierte Absenkung der Schadstoffemissionen erreichbar. Ferner ist das erfindungsgemäße Verfahren besonders für die Verbesserung der Emissionssicherheit in Magerbetriebsphasen bei einem Mager-Otto-Motor und in den Schwachlastphasen bei einem Dieselmotor geeignet. Erfindungsgemäß ist gegebenenfalls vor allem eine Absenkung der Kohlenwasserstoffkonzentration und der Stickoxydkonzentration.

Bei einer bevorzugten Ausführungsform der Erfindung wird als abzusenkende erste Schadstoffkomponente Kohlenwasserstoff und als zweite Schadstoffkomponente Kohlenmonoxyd gewählt. Hiermit ist es insbesondere möglich, die Emissionssicherheit beim Kaltstart von konventionellen und Mager-Otto-Motoren zu verbessern. Wenn, wie bei einer weiteren Ausführungsform der Erfindung, eine Absenkung der Stickoxydemissionen zu Lasten der Kohlenmonoxydemissionen erfolgt, kann insbesondere bei einem konventionellen Otto-Motor, beispielsweise bei Voll-Last, ein verbessertes Emissionsverhalten erreicht werden. Alternativ wird bei einer weiteren Ausführungsform der Erfindung der Emissionswert von Kohlenmonoxyd abgesenkt und eine Erhöhung der Emissionswerte von Stickoxyd und/oder Kohlenwasserstoff zugelassen.

Bei einer bevorzugten Ausführungsform der Erfindung ist eine Anpassung der Rohemissionswerte zumindest der ersten Schadstoffkomponente an die unterschiedliche Konversionseffizienz einer in einer Abgasanlage der Brennkraftmaschine angeordneten Katalysatoreinrichtung vorgesehen. Hiermit ist eine Verbesserung der Gesamtemissions-Sicherheit der Brennkraftmaschine erreichbar. Besonders bevorzugt ist hierbei eine Veränderung des maximalen- bzw. minimalen Schwellwertes und/oder des Maximalwerts der zweiten Schadstoffkomponente in Abhängigkeit von der Betriebstemperatur der Katalysatoreinrichtung.

Eine weitere der Erfindung zugrundeliegende Aufgabe besteht in der Verbesserung einer stetigen Regelung des Lambda-Wertes des Abgases einer Brennkraftmaschine.

Diese Aufgabe wird erfindungsgemäß mit den Merkmalen des unabhängigen Patentanspruchs 9 gelöst. Danach ist zum Betrieb einer Brennkraftmaschine mit zumindest einer in einer Abgasanlage angeordneten Katalysatoreinrichtung, bei dem zur stetigen Regelung des Lambda-Wertes des Abgases zumindest eine Lambda-Sonde in bei Voll-Last, ein verbessertes Emissionsverhalten erreicht werden. Alternativ wird bei einer weiteren Ausführungsform der Erfindung der Emissionswert von Kohlenmonoxyd abgesenkt und eine Erhöhung der Emissionswerte von Stickoxyd und/oder Kohlenwasserstoff zugelassen.

Bei einer bevorzugten Ausführungsform der Erfindung ist eine Anpassung der Rohemissionswerte zumindest der ersten Schadstoffkomponente an die unterschiedliche Konversionseffizienz einer in einer Abgasanlage der Brennkraftmaschine angeordneten Katalysatoreinrichtung vorgesehen. Hiermit ist eine Verbesserung der Gesamtemissions-Sicherheit der Brennkraftmaschine erreichbar. Besonders bevorzugt ist hierbei eine Veränderung des maximalen- bzw. minimalen Schwellwertes und/oder des Maximalwerts der zweiten Schadstoffkomponente in Abhängigkeit von der Betriebstemperatur der Katalysatoreinrichtung.

Ferner ist zum Betrieb einer Brennkraftmaschine mit zumindest einer in einer Abgasanlage angeordneten Katalysatoreinrichtung, bei dem zur stetigen Regelung des Lambda-Wertes des Abgases zumindest eine Lambda-Sonde in der Abgasanlage angeordnet ist, vorgesehen zur Kalibrierung der Lambda-Sonde Emissionswerte des Abgases, vorzugsweise von Stickoxyd, Kohlenwasserstoff und/oder Kohlenmonoxyd heranzuziehen. Diese Kalibrierung geht von der Erkenntnis aus, dass aus den Emissionswerten verschiedener Schadstoffkomponenten der Lambda-Wert des Abgases ermittelt werden kann, da die Konzentration jeder Schadstoffkomponente im Abgas eine charakteristische Lambda-Abhängigkeit aufweist, die beispielsweise in Kennfeldern abgelegt werden können.

Bevorzugten erfolgt die Kallibrierung der Lambda-Sonde unter Heranziehung der Emissionswerte des Abgases nur, wenn bei einer stromabwärts einer Katalysatoreinrichtung angeordneten Lambda -Sonde die Katalysatoreinrichtung eine vorgesehene Betriebstemperatur, vorzugsweise in einem Temperaturbereich zwischen 200 und 400 Grad Celsius aufweist.

Ferner wird der Lambda-Wert des Abgases auf einen Wert von 1 geregelt und es erfolgt eine Anpassung an diesen Wert unter Heranziehung der Emissionswerte von Kohlenwasserstoff und/oder Kohlenmonoxyd einerseits und Stickoxyd andererseits. Hierbei wird berücksichtigt, dass bei Auftreten eines NOX-Durchbruchs ein tatsächlicher Lambda-Wert >1 und bei Auftreten eines Kohlenwasserstoff- und/oder Kohlenmonoxyd-Durchbruchs in der Emission auf einen tatsächlichen Lambda-Wert <1 geschlossen werden kann.

Mit dem Verfahren können auf eine einfache Weise Fehler im Signal der Breitband-Lambda-Sonde korrigiert werden, die auf Alterungs- oder Vergiftungseinflüsse oder auf Fertigungstoleranzen oder dergleichen zurückgehen. Ebenso ist es möglich, durch bestimmte Komponenten des Abgases hervorgerufene Verschiebungen der Sondenkennlinie zum Beispiel die durch einen Wasserstoffanteil im Abgas hervorzurufende sogenannte Fettverschiebung zu kompensieren. Ein weiterer Vorteil des erfindungsgemäßen Verfahrens besteht darin, dass auf die Verwendung einer 2-Punkt-Lambda-Sonde für eine genaue Messung des Lambda-Wertes des Abgases im Bereich Lambda = 1 verzichtet werden kann.

Bei dem erfindungsgemäßen Verfahren können vorteilhaft elektro-chemische und/oder optische Sensoren eingesetzt werden, wie sie an sich beispielsweise aus den genannten EP 0899563, WO79147962, EP 090941 oder DE 19831424 bekannt sind. Besonders bevorzugt sind hierbei optische Sensoren, insbesondere InfrarotSensoren mit einer vernachlässigbar kleinen T90-Zeit, da hiermit eine für die praktischen Bedürfnisse der Erfindung nahezu verzögerungsfreie Ermittlung der Emissionswerte der betreffenden Schadstoffkomponenten möglich ist. Besonders bevorzugt ist auch die Verwendung eines Sensors zur separaten Messung aller betreffenden Schadstoffkomponenten sowie eines Sensors zur Messung von Schadstoffkomponenten und des Lambda-Wertes des Abgases.

Weitere Ausführungsformen, Merkmale und Vorteile der vorliegenden Erfindung ergeben sich aus den abhängigen Ansprüchen sowie unabhängig von ihrer Zusammenfassung in den Ansprüchen aus der nachfolgenden Beschreibung bevorzugter erfindungsgemäßer Ausführungsbeispiele in Verbindung mit den zugehörigen Zeichnungen.

In den Zeichnungen zeigen in schematischer Darstellung:
Figur 1
   eine Brennkraftmaschine mit einer zugeordneten Abgasanlage
Figur 2
   ein Diagramm der Konvertierungsrate eines 3-Wege-Katalysators für Kohlenmonoxyd und Kohlenwasserstoffe in Abhängigkeit von der Katalysatortemperatur
Figur 3
   ein Blockdiagramm der Signalverläufe für die Kalibrierung einer Lambda-Sonde
Figur 4
   ein Diagramm der Kohlenwasserstoffemission bei einer Brennkraftmaschine mit Verbrennungsfehlern.

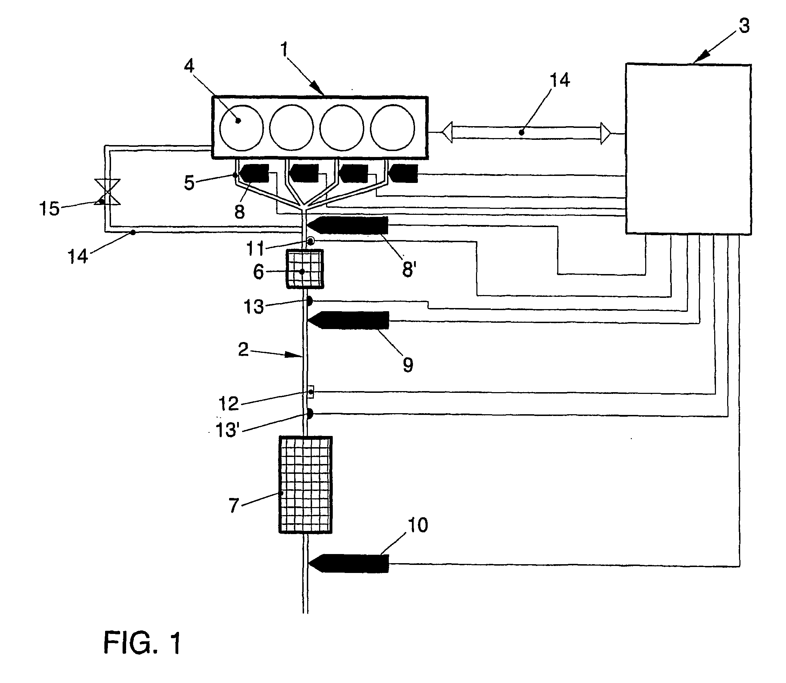

Figur 1 zeigt in schematischer Darstellung eine Brennkraftmaschine 1, beispielsweise ein magerlauffähiger Ottomotor oder eine Dieselbrennkraftmaschine, mit einer Abgasanlage 2 und einem Motorsteuergerät 3, vorzugsweise zum Betrieb eines Kraftfahrzeugs. Die Brennkraftmaschine 1 weist eine Anzahl von Zylinderbänken 4 auf (entsprechende Komponenten sind nur mit einem Bezugszeichen versehen), denen jeweils ein eigener Abgaspfad 5 nachgeschaltet ist. In der Abgasanlage 2 sind als Katalysatoreinrichtungen ein Vorkatalysator 6 und ein Hauptkatalysator 7 angeordnet. Vorzugsweise ist der Vorkatalysator 6 als 3-Wege-Katalysator und der Hauptkatalysator 7 als NOX-Speicherkatalysator ausgebildet. Stromabwärts der Zylinderbänke 4 sind in den Abgaspfaden 5 Sensoren 8 angeordnet, mit denen die Konzentration von Schadstoffkomponenten des durch die Abgasanlage 2 geführten Abgases der Brennkraftmaschine 1 gemessen werden können. Beispielsweise können das CO. NO, NO2, NH3, S02, H2S, CH4 sowie weitere HC-Komponenten sein. Stromaufwärts des Vorkatalysators 6 ist zudem ein weiterer Sensor 8' zur Messung von Schadstoffkomponenten des Abgases angeordnet. In einem Bereich der Abgasanlage 2 zwischen dem Vorkatalysator 6 und dem Hauptkatalysator 7, stromabwärts des Vorkatalysators 6 und stromaufwärts des Hauptkatalysators 7, ist eine weiterer Sensor 9 zur Ermittlung der Konzentration von Schadstoffen im Abgas angeordnet. Ein weiterer Sensor 10 ist stromabwärts des Hauptkatalysators 7 in der Abgasanlage 2 angeordnet. Bei den Sensoren 8, 8', 9 und 10, die in der Figur 1 nur schematisch dargestellt sind, kann es sich um Mehrkomponenten-Sensoren handeln, die jeweils in der Lage sind, mehr als eine Schadstoffkomponente im Abgas zu sensorieren, oder um mehrere in der Zeichnung zur Vereinfachung zusammengefaßte Sensoren, die jeweils verschiedene Schadstoffkomponenten separat messen.

Bevorzugt werden optische Mehrkomponenten-Sensoren für die Sensoren 8, 8', 9 und/oder 10 eingesetzt, die mittels eines an sich bekannten spektrografischen Verfahrens die absolute Konzentration von Schadstoffkomponenten im Abgas zwar NOX-Speicherkatalysatoren eingesetzt werden, jedoch sind zur Speicherentladung und zur NOX-Umsetzung bei einem Lambda-Wert <1 besondere Maßnahmen wie eine erhöhte Abgasrückführung oder die Einspritzung von Kraftstoff in die Abgasanlage erforderlich.

Das erfindungsgemäße Verfahren ist sowohl bei konventionellen und mager-fähigen Otto-Motoren als auch bei Dieselbrennkraftmaschinen zur Optimierung der Rohemission von Schadstoffkomponenten einsetzbar. Dazu wird vorzugsweise mit einem Sensor 8, 8', der stromaufwärts der Katalysatoreinrichtung 6 angeordnet ist, der Emissionswert von mindestens zwei Schadstoffkomponenten des Abgases ermittelt. Vorzugsweise sind dieses CO, CH oder NOX-Komponenten. Das Motorsteuergerät 3 umfasst eine Kontrolleinrichtung, der das Signal der Sensoren 8, 8' zugeführt wird. Die gegebenenfalls auch als separates Bauteil ausgeführte Kontrolleinrichtung weist Mittel auf zum Vergleich der Emissionswerte einer ersten Schadstoffkomponente mit einem vorgegebenen maximalen Schwellwert. Die Kontrolleinrichtung weist ferner Mittel auf, um in Abhängigkeit von dem Vergleichswert ein Signal zu bilden, welches weiteren Komponenten des Motorsteuergeräts 3 zugeführt wird. Ferner wird der Emissionswert einer zweiten Schadstoffkomponente ermittelt und mit einem zugeordneten Maximalwert verglichen. Überschreitet der Emissionswert der ersten Schadstoffkomponente den maximalen Schwellwert, wird entsprechend dem zugeordneten Signal vom Motorsteuergerät 3 ein Betriebsparameter verändert, um den Emissionswert dieser Schadstoffkomponente abzusenken. Dabei wird ebenfalls der Emissionswert der zweiten Schadstoffkomponente daraufhin überwacht, ob er unterhalb des Maximalwertes für diese Schadstoffkomponente bleibt. Die abzusenkende erste Schadstoffkomponente kann beispielsweise NOX und die zweite Schadstoffkomponente HC oder CO, sein. Ebenso kann auch der kumulierte Wert der zwei Schadstoffkomponenten HC und CO verwendet werden. Eine solche Absenkung der NOX-Konzentration zu Lasten anderer Komponenten ist besonders vorteilhaft bei einem konventionellen Otto-Motor mit NOX-Problemen, beispielsweise für SULEV-Fahrzeuge (Super Ultra Low Emission Vehicel).

Gemäß einer weiteren Ausführungsform des erfindungsgemäßen Verfahrens kann als abzusenkende Schadstoffkomponente CO und als zweite Schadstoffkomponente NOx und/oder HC gewählt werden. Dies ist insbesonde bei konventionellen Otto- und magerlauffähigen Otto-Motoren sowie bei Dieselbrennkraftmaschinen mit CO-Problemen bevorzugt.

In einer weiteren Variante des erfindungsgemäßen Verfahrens wird der Emissionswert einer Schadstoffkomponente ermittelt und mit einem vorgegebenen minimalen Schwellwert verglichen. Sobald der minimale Schwellwert unterschritten wird, wird der Wert von mindestens einem Betriebsparameter zur Erhöhung des Emissionswerts dieser Schadstoffkomponente bis auf höchstens diesen Schwellwert verändert, wobei gleichzeitig eine Verminderung des Emissionswerts für eine zweite Schadstoffkomponente erreicht wird.

Erfindungsgemäß wird zur Veränderung der Emissionswerte der mindestens zwei Schadstoffkomponenten beispielsweise die Abgasrückführrate verändert. Eine Vergrößerung der Abgasrückführrate vermindert in an sich bekannter Weise die NOX-Rohemission einer Brennkraftmaschine. Andererseits führen zu hohe Abgasrückführraten zu erhöhten HC-Emissionswerten und bei Dieselbrennkraftmaschinen zusätzlich zu verstärkter Rußbildung. Weitere bevorzugte Betriebsparameter sind Zündzeitpunkt sowie bei Brennkraftmaschinen mit Direkteinspritzung Einspritzzeitpunkt von Vor-, Haupt- und/oder Nacheinspritzungen sowie der Einspritzdruck des Kraftstoffs. Weitere die Schadstoffemission beeinflussende Betriebsparameter sind gegebenenfalls die Stellung einer Tumble-Klappe, der Wert eines Phasenstellers von Nockenwellen und/oder der Ladedruck bei Einsatz eines Aufladungsverfahrens.

Bei dem im vorangehenden beschriebenen Regelungsverfahren wird bevorzugt eine an sich bekannte Steuerung oder Regelung des Lambda-Werts des Abgases eingesetzt, insbesondere unter Heranziehung von Kennfeldern, die im Motorregelgerät 3 abgelegt sind. Als Steuergrößen können dabei beispielsweise die Stellung einer Drosselklappe oder die angesaugte Luftmenge verwendet werden.

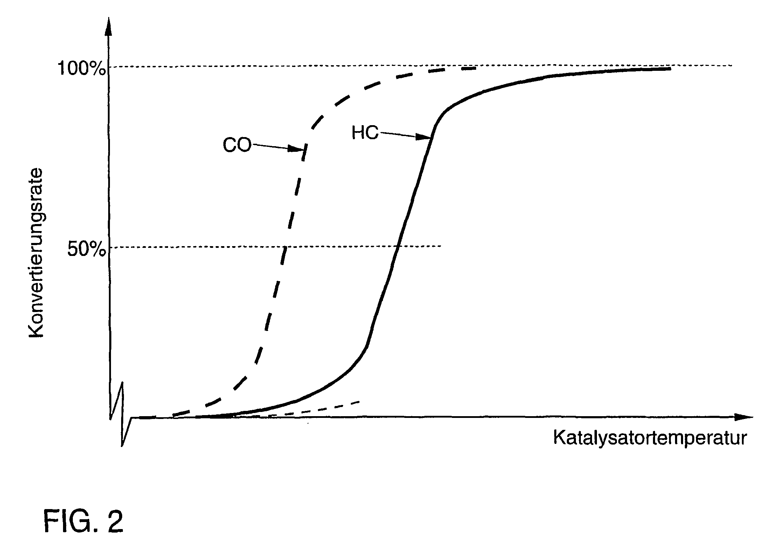

Figur 2 zeigt eine schematische Darstellung der Konvertierungsrate eines 3-Wege-Katalysators für CO- und HC-Emissionen in Abhängigkeit von der Katalysatortemperatur. Wie zu erkennen ist, überschreitet die Konvertierungsrate erst ab einer minimalen Temperatur, der sogenannten "light-off-Temperatur" eine Grenze von 50 %. Wie in der Figur 2 zu erkennen ist, ist die light-off-Temperatur des Katalysators für verschiedene Schadstoffkomponenten im allgemeinen unterschiedlich, woraus ein für die verschiedenen Schadstoffkomponenten unterschiedliches temperaturabhängiges Emissionsspektrum stromabwärts des Katalysators resultiert. Erfindungsgemäß wird das Rohemissionsspektrum einer Brennkraftmaschine an die unterschiedliche Konvertierungsleistung einer nachgeschalteten Katalysatoreinrichtung bei verschiedenen Temperaturen angepaßt. Hierzu können sowohl die stromab einer Katalysatoreinrichtung gemessenen Schadstoffemissionswerte als auch in einem Datenspeicher abgelegte modellierte Werte verwendet werden. Bei dem in Figur 2 dargestellten Szenario ist die light-off-Temperatur für die Schadstoffkomponente CO geringer als die Schadstoffkomponente HC. In diesem Fall ist daher eine Anhebung der CO-Konzentration bei gleichzeitiger Absenkung der HC-Konzentration im Abgas eine effektive Möglichkeit zur Reduzierung der Gesamtemission von Schadstoffen. Entsprechend wird der maximale Schwellenwert bzw. der minimale Schwellenwert in Abhängigkeit von der Betriebstemperatur der Katalysatoreinrichtung verändert.

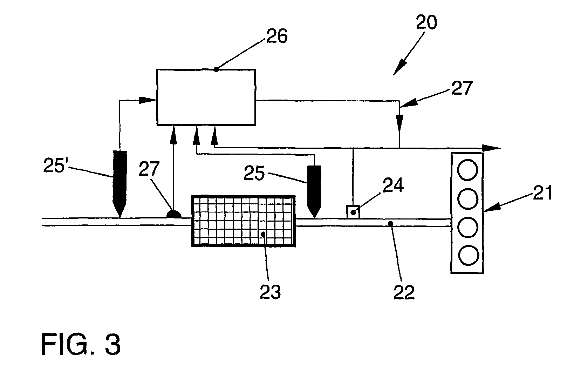

Zur Verbesserung der stetigen Regelung des Lambda-Werts des Abgases werden erfindungsgemäß Emissionswerte des Abgases zur Kalibrierung einer geeigneten Lambda-Sonde, beispielsweise einer Breitband-Lambda-Sonde herangezogen. Derartige Sonden unterliegen beispielsweise Alterungsprozessen, Vergiftungen und Exemplarstreuungen, die sich verfälschend auf das Sondensignal auswirken. Das erfindungsgemäße Verfahren wird anhand des in Figur 3 dargestellten Regelungssystems 20 genauer erläutert. In Figur 3 bezeichnet 21 eine Brennkraftmaschine mit einer Abgasanlage 22 und einer zugeordneten Katalysatoreinrichtung 23. Eine Breitband-Lambda-Sonde 24 ist stromaufwärts der Katalysatoreinrichtung 23 angeordnet. Ferner sind Mehrkomponenten-Sensoren 25, 25' stromaufwärts bzw. stromabwärts der Katalysatoreinrichtung 23 angeordnet. Die Breitband-Lambda-Sonde 24 kann auch stromabwärts der Katalysatoreinrichtung 23 angeordnet sein. Die Signale der Breitband-Lambda-Sonde 24 werden einer Kalibriereinrichtung 26 zugeführt. Ferner erhält die Kallibriereinrichtung 26 Signale der Mehrkomponenten-Sensoren 25 und/oder 25' zur Auswertung. Da die Konzentration von Schadstoffkomponenten im Abgas eine charakteristische Lambda-Abhängigkeit aufweist, die beispielsweise in Kennfeldern abgelegt werden kann, kann ein Korrekturwert zur Kalibrierung der Breitband-Lambda-Sonde 24 bestimmt werden. Hierzu werden die von den Sensoren 25, 25'ermittelten Emissionswerte mit entsprechenden Lambda-Werten, welche von der Breitband-Lambda-Sonde 24 geliefert werden, ausgewertet und aus dem Auswertungsergebnis ein Korrektursignal 27 ermittelt.

Da das Konvertierungsverhalten der Katalysatoreinrichtung 23 im allgemeinen temperaturabhängig ist, ist es zweckmäßig, die Emissionswerte des stromabwärts angeordneten Mehrkomponenten-Sensors 25'in Abhängigkeit von der Temperatur der Katalysatoreinrichtung 23 auszuwerten. Hierzu ist ein Temperatursensor 27, der möglichst nahe der Katalysatoreinrichtung 23 angeordnet sein kann, oder eine Temperaturmodellierung vorgesehen, dessen Signale der Kallibriereinrichtung 26 zugeführt werden. Insbesondere kann vorgesehen sein, dass stromabwärts der Katalysatoreinrichtung 23 ermittelte Emissionswerte von der Kallibriereinrichtung 26 nur ausgewertet werden, wenn die Katalysatoreinrichtung 23 eine Temperatur innerhalb eines bevorzugten Temperaturfensters aufweist, insbesondere oberhalb einer light-off-Temperatur. Vorzugsweise liegt das Temperaturfenster in einem Temperaturbereich zwischen 200 und 400 Grad Celsius.

Bevorzugt ist eine Kallibrierung der Breitband-Lambda-Sonde 24 im Bereich eines Lambda-Werts =1. In dem Bereich um Lambda = 1 herum ist, beispielsweise bei einem 3-Wege-Katalysator, das Konvertierungsverhalten der Katalysatoreinrichtung 23 zumindest oberhalb der light-off-Temperatur bekannt und kann beispielsweise als Kennfeld in der Kallibriereinrichtung 26 abgelegt sein. Die mittels des Sensors 25'gemessenen Emissionswerte stromabwärts der Katalysatoreinrichtung 23 können beispielsweise erhöhte NOX-Werte aufweisen, die auf einen Lambda-Wert >1 hinweisen, oder es können erhöhte HC/CO- oder NH3-Werte gemessen werden, die auf einen Lambda-Wert <1 hinweisen.

Da die Emissionswerte des Abgases einer Brennkraftmaschine insbesondere auch von den Einzelheiten des Verbrennungsprozesses abhängig sind, werden erfindungsgemäß die Emissionswerte von mindestens zwei Schadstoffkomponenten des Abgases zur Diagnose des Betriebszustandes der Brennkraftmaschine herangezogen. Hierbei werden die Emissionswerte von mindestens zwei Schadstoffkomponenten ermittelt und mit beispielsweise in einem Speicher des Motorsteugeräts 3 abgelegten Sollwerten verglichen. Das Vergleichsergebnis wird zur Bildung eines für den Betriebszustand der Brennkraftmaschine charakteristischen Zustandssignals herangezogen und es wird in Abhängigkeit von dem Wert des Zustandssignals ein Lambda-Wert des Abgases verändert. Dabei bezieht sich die Diagnose bevorzugt auf das Zündverhalten der Brennkraftmaschine, insbesondere, um verschleppte Verbrennungen und/oder Zündaussetzer zu identifizieren.

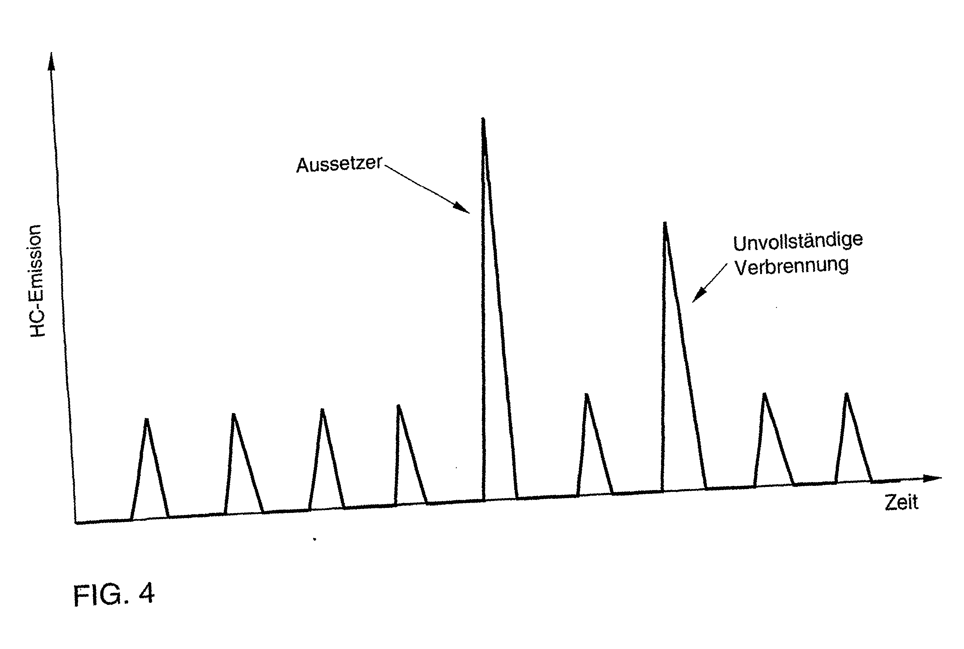

Wie in der Figur 4 schematisch dargestellt, zeigen sich Zündaussetzer oder verschleppte Verbrennungen beispielsweise in erhöhten HC-Emissionswerten der Brennkraftmaschine. Dabei weist ein Zündaussetzer eine charakteristische andere Peakhöhe sowie eine andere Hüllkurve der gegen die Zeit aufgetragenen Emissionswerte auf, als eine verschleppte oder unvollständige Verbrennung. Während bei einem derartigen Zündverhalten der Brennkraftmaschine die HC-Emissionswerte ansteigen, können sich die NOX- oder CO-Emissionswerte unterschiedlich verhalten, insbesondere können bei nicht erfolgter Zündung oder verschleppter Verbrennung kurzfristige niedrigere NOX- bzw. CO-Werte auftreten.

Entsprechend einem weiteren Aspekt der Erfindung werden in Abhängigkeit von dem Vergleichswert Betriebsparameter, beispielsweise die Abgasrückführrate verändert, um den Emissionswert bestimmter Schadstoffkomponenten abzusenken oder zu erhöhen. Dabei wird erfindungsgemäß der erforderliche Wert der Veränderung dieses Betriebsparameters ausgewertet und zur Bildung des den Betriebszustand der Brennkraftmaschine charakterisierenden Zustandssignals herangezogen. Alternativ oder zusätzlich wird die Veränderung des Emissionswerts einer weiteren Schadstoffkomponente in Abhängigkeit von dem Betriebsparameter erfaßt und bei der Bildung des Zustandssignals berücksichtigt. Verbrennungsprobleme, insbesondere Fehlzündungen und/oder verschleppte oder unvollständige Verbrennungen des Kraftstoffes treten bevorzugt in der Magerphase bei mager-lauffähigen Brennkraftmaschinen auf. In diesem Fall wird erfindungsgemäß der Lambda-Wert in Richtung auf ein fetteres Gemisch erniedrigt.

Da das Verbrennungsverhalten der Brennkraftmaschine sich auf die Drehzahl der Brennkraftmaschine auswirkt, kann gemäß einem weiteren Aspekt der Erfindung zusätzlich die Drehzahl der Brennkraftmaschine ermittelt und ausgewertet werden. Insbesondere werden die Schwankungen der Drehzahl der Brennkraftmaschine innerhalb eines vorgegebenen Zeitintervalls ermittelt und bei der Diagnose berücksichtigt. Eine für einzelne Zylinder oder zumindest Zylinderbänke selektive Diagnose kann erfolgen, wenn die Rohemissionswerte in den einer Zylinderbank jeweils zugeordneten separaten Abgaskrümmern, wie in Figur 1 dargestellt wird, von separaten Sensoren 8 ermitelt werden.

Das Zustandssignal kann über eine Anzeige dargestellt werden, um ein manuelles Eingreifen eines Fahrzeugführers zu ermöglichen. Optional ist ebenfalls eine Speicherung des Wertes des Zustandssignals vorgesehen, so dass gegebenenfalls bei Service-Arbeiten oder Reparaturmaßnahmen eine Auswertung des Werts des Zustandssignals erfolgen kann.

Bei dem erfindungsgemäßen Verfahren werden bevorzugt Sensoren für die Schadstoffkomponenten CO, NO, NO2, NH3, S02, H2S, CH4 sowie weitere HC-Komponenten verwendet, die getrennt voneinander gleichzeitig detektierbar sind. Die Messung kann dabei kontinuierlich oder diskontinuierlich erfolgen.

Die spezifische Funktionsweise der Sensoren ist für die vorstehend beschriebene Erfindung ohne Belang. Jedoch werden bevorzugt optische, insbesondere InfrarotSensoren eingesetzt. Diese ermöglichen sehr kurze Messzeiten, beispielsweise von weniger als 500 Mikrosekunden und Messintervalle von beispielsweise weniger als 200 Mikrosekunden und eine entsprechend schnelle und präzise Auswertung der jeweiligen Emissionswerte.

Insgesamt wird mit dem erfindungsgemäßen Verfahren eine Möglichkeit geschaffen, das Emissionsverhalten einer Brennkraftmaschine mit geringem zusätzlichen Aufwand beträchtlich zu verbessern. Besonders vorteilhaft ist, dass das Verfahren bei den verschiedensten Arten von Brennkraftmaschinen, konventionellen oder magerlauffähigen Otto-Motoren, Dieselbrennkraftmaschinen oder dergleichen und in Kombination mit verschiedenen Katalysatoreinrichtungen und Strategien zur Verminderung der Abgasemissionswerte einsetzbar ist.

## Patentansprüche

1. Verfahren zum Betrieb einer Brennkraftmaschine, insbesondere eines magerlauffähigen Ottomotors oder einer Dieselbrennkraftmaschine, bei dem mindestens ein Betriebsparameter der Brennkraftmaschine in Abhängigkeit von Emissionswerten des Abgases zur Beeinflussung der Emissionswerte verändert wird, **dadurch gekennzeichnet, dass** die Emissionswerte von mindestens zwei Schadstoffkomponenten des Abgases, wie CO, NO, NO2, NH3, S02, H2S, CH4, und/oder weitere HC Komponenten gemessen werden, und, wenn der Emissionswert einer ersten der mindestens zwei Schadstoffkomponenten einen vorgegebenen maximalen Schwellwert überschreitet, der Wert von mindestens einem Betriebsparameter, beispielsweise eine Drosselklappenstellung, einer Abgasrückführrate, ein Zündzeitpunkt, eine Tumble-Klappenstellung, ein Einspritzzeitpunkt, ein Ladedruck, und/oder eine Phasenstellung der Nockenwelle oder dergleichen, zur Absenkung des Emissionswertes der ersten Schadstoffkomponente verändert wird, wobei zumindest für die zweite der mindestens zwei Schadstoffkomponenten eine Überwachung des Emissionswertes daraufhin vorgesehen ist, ob dieser unterhalb eines Maximalwertes für diese Schadstoffkomponente bleibt und eine Erhöhung des Emissionswertes bis zu diesem Maximalwert zugelassen wird.

2. Verfahren zum Betrieb einer Brennkraftmaschine, insbesondere eines magerlauffähigen Ottomotors oder einer Dieselbrennkraftmaschine, bei dem mindestens ein Betriebsparameter der Brennkraftmaschine in Abhängigkeit von Emissionswerten des Abgases zur Beeinflussung der Emissionswerte verändert wird, **dadurch gekennzeichnet, dass** die Emissionswerte von mindestens zwei Schadstoffkomponenten des Abgases, wie CO, NO, NO₂, NH3, S02, H2S, CH4 und/oder weitere HC-Komponenten gemessen werden und, wenn der Emissionswert einer ersten der mindestens zwei Schadstoffkomponenten einen vorgegebenen minimalen Schwellwert unterschreitet, der Wert von mindestens einem Betriebsparameter, beispielsweise einer Drosselklappenstellung, einer Abgasrückführrate, ein Zündzeitpunkt, eine Tumble-Klappenstellung, ein Einspritzzeitpunkt, ein Ladedruck, und/oder eine Phasenstellung der Nockenwelle oder dergleichen, zur Erhöhung des Emissionswertes dieser Schadstoffkomponente bis auf höchstens diesen Schwellwert zur Verminderung des Emissionswertes zumindest für die zweite der mindestens zwei Schadstoffkomponenten verändert wird.

3. Verfahren nach Anspruch 1 oder 2, **dadurch gekennzeichnet, dass** die Emission eine Rohemission ist.

4. Verfahren nach zumindest einem der Ansprüche 1-3, **dadurch gekennzeichnet, dass** als erste Schadstoffkomponente Kohlenwasserstoff und als zweite Schadstoffkomponente Stickoxyd und/oder Kohlenmonoxyd gewählt wird.

5. Verfahren nach zumindest einem der Ansprüche 1-3, **dadurch gekennzeichnet, dass** als erste Schadstoffkomponente Stickoxyd und als zweite Schadstoffkomponente Kohlenmonoxyd und/oder Kohlenwasserstoff gewählt wird.

6. Verfahren nach zumindest einem der Ansprüche 1-3, **dadurch gekennzeichnet, dass** als erste Schadstoffkomponente Kohlenmonoxyd und als zweite Schadstoffkomponente Stickoxyd und/oder Kohlenwasserstoff gewählt wird.

7. Verfahren nach zumindest einem der vorhergehenden Ansprüche, **dadurch gekennzeichnet, dass** der maximale Schwellwert, der minimale Schwellwert der ersten Schadstoffkomponente und/oder der Maximalwert der zweiten Schadstoffkomponente in Abhängigkeit vom Betriebspunkt der Brennkraftmaschine, insbesondere von der Last, der Drehzahl und/oder der Betriebstemperatur gewählt wird.

8. Verfahren nach zumindest einem der vorhergehenden Ansprüche, **dadurch gekennzeichnet, dass** in der Abgasanlage der Brennkraftmaschine eine Katalysatoreinrichtung vorgesehen ist, und der maximale- und/oder minimale Schwellwert der ersten Schadstoffkomponente in Abhängigkeit von der Funktion, insbesondere der Betriebstemperatur der Katalysatoreinrichtung gewählt wird.

9. Verfahren nach zumindest einem der vorhergehenden Ansprüche, **dadurch gekennzeichnet, dass** als Katalysatoreinrichtung zumindest ein 3-Wege-Katalysator, ein Oxydationskatalysator oder ein NOX-Speicherkatalysator vorgesehen ist.

10. Verfahren nach zumindest einem der vorhergehenden Ansprüche, **dadurch gekennzeichnet, dass** die Verbrennungskraftmaschine eine Abgasanlage mit mehreren Abgaspfaden aufweist.

11. Verfahren nach Anspruch 10, **dadurch gekennzeichnet, dass** die jedem Abgaspfad zugeordneten Emissionswerte separat ermittelt werden.

12. Verfahren nach zumindest einem der vorhergehenden Ansprüche, **dadurch gekennzeichnet, dass** die kumulierten Emissionswerte von mindestens zwei Schadstoffkomponenten ermittelt werden.

13. Verfahren nach zumindest einem der vorhergehenden Ansprüche, **dadurch gekennzeichnet, dass** zur Ermittlung der Emissionswerte der mindestens zwei Schadstoffkomponenten mindestens ein elektrochemischer Sensor verwendet wird.

14. Verfahren nach zumindest einem der vorhergehenden Ansprüche, **dadurch gekennzeichnet, dass** zur Ermittlung der Emissionswerte der mindestens zwei Schadstoffkomponenten mindestens ein optischer, vorzugsweise nach dem Prinzip der Reflektionsspektroskopie, besonders bevorzugt im infraroten Lichtbereich arbeitender Sensor verwendet wird.

15. Verfahren nach zumindest einem der vorhergehenden Ansprüche, **dadurch gekennzeichnet, dass** zur Ermittlung der Emissionswerte der mindestens zwei Schadstoffkomponenten mindestens ein Sensor mit einer Messzeit < 500 Mikrosekunden und/oder Messintervallen < 200 Mikrosekunden eingesetzt wird.

16. Verfahren nach zumindest einem der vorhergehenden Ansprüche, **dadurch gekennzeichnet, dass** zumindest ein Sensor sowohl zur Ermittlung von Emissionswerten der mindestens zwei Schadstoffkomponenten als auch des Lambda-Wertes des Abgases eingesetzt wird.

## Claims

1. Method for operating an internal combustion engine, in particular a spark ignition engine which is capable of lean running or a diesel internal combustion engine and in which at least one operating parameter of the internal combustion engine is changed as a function of emission values of the exhaust gas in order to influence the emission values, **characterized in that** the emission values of at least two pollutant components of the exhaust gas such as CO, NO, NO2, NH3, SO2, H2S, CH4 and/or further hydrocarbon components are measured and if the emission value of a first of the at least two pollutant components exceeds a predefined maximum threshold value, the value of at least one operating parameter, for example a throttle valve position, an exhaust gas recirculation rate, an ignition time, a tumble valve position, an injection time, a charge pressure and/or a phase position of the camshaft or the like is changed in order to decrease the emission value of the first pollutant component, in which case, at least for the second of the at least two pollutant components, monitoring of the emission value to determine whether it remains below a maximum value for this pollutant component and whether an increase in the emission value to this maximum value is permitted is provided.

2. Method for operating an internal combustion engine, in particular a spark ignition engine which is capable of lean running or a diesel internal combustion engine, in which at least one operating parameter of the internal combustion engine is changed as a function of emission values of the exhaust gas in order to influence the emission values, **characterized in that** the emission values of at least two pollutant components of the exhaust gas such as CO, NO, NO2, NH3, SO2, H2S, CH4 and/or further hydrocarbon components are measured and, if the emission value of a first of the at least two pollutant components drops below a predefined minimum threshold value, the value of at least one operating parameter, for example a throttle valve position, an exhaust gas recirculation rate, an ignition time, a tumble valve position, an injection time, a charge pressure and/or a phase position of the camshaft or the like is changed in order to increase the emission value of this pollutant component up to a maximum of this threshold value in order to decrease the emission value at least for the second of the at least two pollutant components.

3. Method according to Claim 1 or 2, **characterized in that** the emission is a raw emission.

4. Method according to at least one of Claims 1 to 3, **characterized in that** hydrocarbon is selected as the first pollutant component, and nitrogen oxide and/or carbon monoxide are selected as the second pollutant component.

5. Method according to at least one of Claims 1 to 3, **characterized in that** nitrogen oxide is selected as the first pollutant component, and carbon monoxide and/or hydrocarbon are selected as the second pollutant component.

6. Method according to at least one of Claims 1 to 3, **characterized in that** carbon monoxide is selected as the first pollutant component, and nitrogen oxide and/or hydrocarbon are selected as the second pollutant component.

7. Method according to at least one of the preceding claims, **characterized in that** the maximum threshold value, the minimum threshold value of the first pollutant component and/or the maximum value of the second pollutant component are selected as a function of the operating point of the internal combustion engine, in particular of the load, the rotational speed and/or the operating temperature.

8. Method according to at least one of the preceding claims, **characterized in that** a catalytic converter device is provided in the exhaust gas system of the internal combustion engine, and the maximum threshold value and/or minimum threshold value of the first pollutant component is selected as a function of the operation, in particular the operating temperature, of the catalytic converter device.

9. Method according to at least one of the preceding claims, **characterized in that** at least a three-way catalytic converter, an oxidation catalytic converter or a NOX storage catalytic converter is provided as a catalytic converter device.

10. Method according to at least one of the preceding claims, **characterized in that** the internal combustion engine has an exhaust gas system with a plurality of exhaust gas paths.

11. Method according to Claim 10, **characterized in that** the emission values which are assigned to each exhaust gas path are determined separately.

12. Method according to at least one of the preceding claims, **characterized in that** the accumulated emission values are determined by at least two pollutant components.

13. Method according to at least one of the preceding claims, **characterized in that** at least one electrochemical sensor is used to determine the emission values of the at least two pollutant components.

14. Method according to at least one of the preceding claims, **characterized in that** at least one optical sensor, preferably operating according to the principle of reflection spectroscopy, particularly preferably in the infrared light range, is used to determine the emission values of the at least two pollutant components.

15. Method according to at least one of the preceding claims, **characterized in that** at least one sensor with a measuring time < 500 microseconds and/or measuring intervals < 200 microseconds is used to determine the emission values of the at least two pollutant components.

16. Method according to at least one of the preceding claims, **characterized in that** at least one sensor is used to determine emission values both of the at least two pollutant components and of the lambda value of the exhaust gas.

## Revendications

1. Procédé de fonctionnement d'un moteur à combustion interne, notamment un moteur à étincelle pouvant fonctionner avec un mélange maigre ou un moteur à combustion diesel, avec lequel au moins un paramètre de fonctionnement du moteur à combustion interne est modifié en fonction des valeurs d'émission des gaz d'échappement en vue d'influencer les valeurs d'émission, **caractérisé en ce que** les valeurs d'émission d'au moins deux composantes nocives des gaz d'échappement, telles que le CO, NO, N02, NH3, S02, H2S, CH4 et/ou d'autres composantes HC, sont mesurées et, si la valeur d'émission d'une première des au moins deux composantes nocives dépasse une valeur de seuil maximale prédéfinie, la valeur d'au moins un paramètre de fonctionnement, par exemple une position de papillon d'étranglement, un taux de retour des gaz d'échappement, un moment d'allumage, une position de clapet basculant, un moment d'injection, une pression de charge et/ou une position de phase de l'arbre à cames ou similaire, est modifiée en vue de diminuer la valeur d'émission de la première composante nocive, une surveillance de la valeur d'émission d'au moins la deuxième des au moins deux composantes nocives étant prévue pour vérifier si celle-ci demeure au-dessous d'une valeur maximale pour cette composante nocive et une augmentation de la valeur d'émission étant autorisée jusqu'à cette valeur maximale.

2. Procédé de fonctionnement d'un moteur à combustion interne, notamment un moteur à étincelle pouvant fonctionner avec un mélange maigre ou un moteur à combustion diesel, avec lequel au moins un paramètre de fonctionnement du moteur à combustion interne est modifié en fonction des valeurs d'émission des gaz d'échappement en vue d'influencer les valeurs d'émission, **caractérisé en ce que** les valeurs d'émission d'au moins deux composantes nocives des gaz d'échappement, telles que le CO, NO, N02, NH3, SO2, H2S, CH4 et/ou d'autres composantes HC, sont mesurées et, si la valeur d'émission d'une première des au moins deux composantes nocives devient inférieure à une valeur de seuil minimale prédéfinie, la valeur d'au moins un paramètre de fonctionnement, par exemple une position de papillon d'étranglement, un taux de retour des gaz d'échappement, un moment d'allumage, une position de clapet basculant, un moment d'injection, une pression de charge et/ou une position de phase de l'arbre à cames ou similaire, est modifiée en vue d'augmenter la valeur d'émission de cette composante nocive au maximum jusqu'à cette valeur de seuil en vue de diminuer la valeur d'émission d'au moins la deuxième des au moins deux composantes nocives.

3. Procédé selon la revendication 1 ou 2, **caractérisé en ce que** l'émission est une émission brute.

4. Procédé selon au moins l'une des revendications 1 à 3, **caractérisé en ce que** la première composante nocive sélectionnée est un hydrocarbure et la deuxième composante nocive sélectionnée est de l'oxyde d'azote et/ou du monoxyde de carbone.

5. Procédé selon au moins l'une des revendications 1 à 3, **caractérisé en ce que** la première composante nocive sélectionnée est de l'oxyde d'azote et la deuxième composante nocive sélectionnée est du monoxyde de carbone et/ou un hydrocarbure.

6. Procédé selon au moins l'une des revendications 1 à 3, **caractérisé en ce que** la première composante nocive sélectionnée est du monoxyde de carbone et la deuxième composante nocive sélectionnée est de l'oxyde d'azote et/ou un hydrocarbure.

7. Procédé selon au moins l'une des revendications précédentes, **caractérisé en ce que** la valeur de seuil maximale, la valeur de seuil minimale de la première composante nocive et/ou la valeur maximale de la deuxième composante nocive sont sélectionnées en fonction du point de fonctionnement du moteur à combustion interne, notamment en fonction de la charge, de la vitesse de rotation et/ou de la température de service.

8. Procédé selon au moins l'une des revendications précédentes, **caractérisé en ce qu'**un dispositif catalyseur est prévu dans le circuit des gaz d'échappement du moteur à combustion interne et la valeur de seuil maximale et/ou minimale de la première composante nocive est sélectionnée en fonction du fonctionnement, notamment de la température de service du dispositif catalyseur.

9. Procédé selon au moins l'une des revendications précédentes, **caractérisé en ce que** le dispositif catalyseur prévu est au moins un catalyseur à 3 voies, un catalyseur à oxydation ou un catalyseur à accumulateur de NOX.

10. Procédé selon au moins l'une des revendications précédentes, **caractérisé en ce que** le moteur à combustion interne présente un circuit de gaz d'échappement comprenant plusieurs trajets de gaz d'échappement.

11. Procédé selon la revendication 10, **caractérisé en ce que** les valeurs d'émission associées à chaque trajet de gaz d'échappement sont déterminées séparément.

12. Procédé selon au moins l'une des revendications précédentes, **caractérisé en ce que** les valeurs d'émission cumulées d'au moins deux composantes nocives sont déterminées.

13. Procédé selon au moins l'une des revendications précédentes, **caractérisé en ce qu'**au moins un capteur électrochimique est utilisé pour déterminer les valeurs d'émission des au moins deux composantes nocives.

14. Procédé selon au moins l'une des revendications précédentes, **caractérisé en ce qu'**au moins un capteur optique, fonctionnant de préférence selon le principe de la spectroscopie par réflexion, notamment de préférence dans la plage de lumière infrarouge, est utilisé pour déterminer les valeurs d'émission des au moins deux composantes nocives.

15. Procédé selon au moins l'une des revendications précédentes, **caractérisé en ce qu'**au moins un capteur ayant un temps de mesure < 500 microsecondes et/ou des intervalles de mesure < 200 microsecondes est utilisé pour déterminer les valeurs d'émission des au moins deux composantes nocives.

16. Procédé selon au moins l'une des revendications précédentes, **caractérisé en ce qu'**au moins un capteur est utilisé à la fois pour déterminer les valeurs d'émission des au moins deux composantes nocives et la valeur lambda des gaz d'échappement.
